Europäisches Patentamt

European Patent Office

Office européen des brevets

(19)

(11) Veröffentlichungsnummer: **0 015 526**
**A1**

(12) # EUROPÄISCHE PATENTANMELDUNG

(21) Anmeldenummer: **80101049.7**

(22) Anmeldetag: **03.03.80**

(51) Int. Cl.³: **H 02 B 1/08, E 05 B 65/46**

(30) Priorität: **07.03.79 DE 2908810**

(43) Veröffentlichungstag der Anmeldung: **17.09.80**
**Patentblatt 80/19**

(84) Benannte Vertragsstaaten: **BE CH FR IT NL**

(71) Anmelder: **DORNIER GMBH, Postfach 1420, D-7990 Friedrichshafen (DE)**

(72) Erfinder: **Frischknecht, Erich, Schlehenweg 12, D-7990 Friedrichshafen1 (DE)**

(74) Vertreter: **Landsmann, Ralf, Dipl.-Ing., Kleeweg 3, D-7990 Friedrichshafen 2 (DE)**

(54) **Vorrichtung zum Befestigen von Gerätekoffern in Gestellen.**

(57) Vorrichtung zum Befestigen von Gerätekoffern in Gestellen, wobei mehrere Spannelemente am Gestell angeordnet sind, die auf einen oder mehrere Gerätekoffer einwirken und von Nocken betätigt werden, die auf einer Nockenwelle angeordnet sind, und die Nockenwelle mit mindestens einem Betätigungshebel verbunden ist.

EP 0 015 526 A1

ACTORUM AG

D O R N I E R   G M B H
7990 Friedrichshafen


Vorrichtung zum Befestigen von Gerätekoffern in Gestellen

---

Die Erfindung betrifft eine Vorrichtung zum Befestigen von Gerätekoffern in Gestellen, wobei ein Spannelement auf eine ebene Oberfläche des Gerätekoffers einwirkt und ein stumpfwinklig abgebogener Hebel, dessen einer Schenkel eine Spannfläche bildet, am Gestell angelenkt ist, dass der Hebel auf der der Spannfläche abgewandten Seite eine an einem Schenkel befestigte Blattfeder aufweist, wobei die Schenkel des Hebels zusammen mit der Blattfeder ein stumpfwinkliges Dreieck bilden, und dass eine drehbar gelagerte Nocke, die mit einem Betätigungshebel starr verbunden ist, die Blattfeder berührt, eine Totpunktlage in bezug auf die Blattfeder durchläuft und auf den Schenkel drückt, so dass die Spannfläche den Gerätekoffer verspannt.


Grössere elektrische und elektronische Geräte für den zivilen und militärischen Gebrauch werden zumeist in Gestalt kofferähnlicher Kästen oder als Einschübe vom Hersteller geliefert und in Gestellen untergebracht. Bei Verwendung der Geräte in Gebäuden oder beim mobilen Einsatz der Geräte in Übertragungswagen und Fernmelde-

- 2 -                                                    0015526

kabinen muss sichergestellt sein, dass die Gerätekoffer
bei Defekten oder technisch bedingten Änderungen der Anlage leicht demontierbar und durch andere Gerätekoffer
ersetzbar sind. Hierzu werden Befestigungselemente in
Form von Pratzen verwendet, die sich mit einem Schraubenschlüssel lösen lassen. Insbesondere beim mobilen
Einsatz müssen die Befestigungselemente so ausgebildet
sein, dass die Gerätekoffer in den Gestellen rüttel-,
stoss- und schwingungsfrei gehaltert sind.

Dem deutschen Patent 25 11 002 liegt die Aufgabe zugrunde,
eine Vorrichtung zum Befestigen von Gerätekoffern in Gestellen zu schaffen, die die Geräte sicher in den Gestellen hält, leicht lösbar ist und darüber hinaus einfach zu bedienen ist, so dass das Auswechseln der Gerätekoffer ohne Hilfsmittel möglich ist.

Der Gegenstand des deutschen Patents 25 11 002 soll dahingehend verbessert werden, dass mehrere Gerätekoffer
nebeneinander in einem Gestell befestigbar sind und auch
breite Gerätekoffer sicher eingespannt werden können.

Diese Aufgabe wird mittels einer Vorrichtung der eingangs genannten Art erfindungsgemäss dadurch gelöst,
dass mehrere Spannelemente am Gestell angeordnet sind,
die auf einen oder mehrere Gerätekoffer einwirken und
von Nocken betätigt werden, die auf einer Nockenwelle
angeordnet sind, und dass die Nockenwelle mit mindestens
einem Betätigungshebel verbunden ist.

Die Spannelemente werden dabei so angeordnet, dass jeder
Gerätekoffer in einer Gestelleiste von mindestens einem
Spannelement rüttelsicher gehaltert wird und auf breite
Gerätekoffer zwei oder mehrere Spannelemente einwirken.
Die Spannelemente sind leicht auswechselbar.

Eine vorteilhafte Ausführungsform der Erfindung ist dadurch gekennzeichnet, dass die Nockenwelle von Gestellseite zu Gestellseite verläuft und an ihren Enden jeweils ein Betätigungshebel vorhanden ist. Hierdurch wird die Betätigung mehrerer Spannelemente wesentlich erleichtert.

Fertigungstechnisch ist es erfindungsgemäss vorteilhaft, wenn eine durchgehende Nockenprofilwelle vorhanden ist.

Die Erfindung wird anhand von Figuren erläutert, die nachfolgend beschrieben sind.

Es zeigen:

Fig. 1  eine aus dem deutschen Patent 25 11 002 bekannte Vorrichtung zum Befestigen von Gerätekoffern in Gestellen,

Fig. 2  einen Schnitt entlang der Linie A-A von Fig. 1,

Fig. 3  die prinzipielle Darstellung der Anordnung mehrerer Gerätekoffer in einem Gestell und

Fig. 4  die Draufsicht auf eine erfindungsgemässe Vorrichtung.

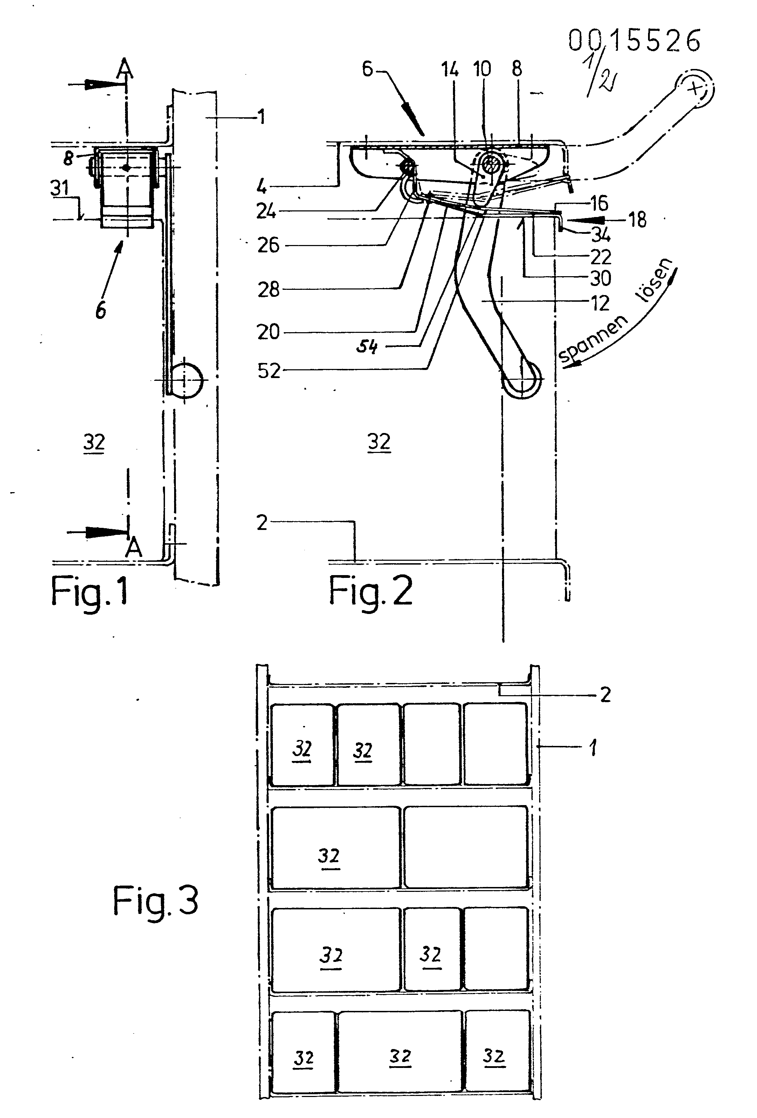

Fig. 1 zeigt gestrichelt Teil eines Gestells 1, das aus einer Bodenplatte 2 und einer Deckplatte 4 besteht. An der Deckplatte 4 ist eine Vorrichtung 6 mittels eines U-Profils 8 befestigt. Im U-Profil 8 ist eine Achse 10 gelagert, die mit einem Betätigungshebel 12 und einem Nocken 14 in Verbindung steht.

Nocken 14 drückt über eine Blattfeder 16, die deutlich in Fig. 2 zu erkennen ist, auf einen Hebel 18, der aus zwei Schenkeln 20, 22 gebildet ist, die zwischen sich einen stumpfen Winkel einschliessen. Hebel 18 ist mittels einer Achse 24 am U-Profil 8 angelenkt und eine Schraubenfeder 26 drückt ihn gegen Nocken 14 in Richtung auf die Deckplatte 4, so dass bei gelöstem Bedienungshebel 12 (gestrichelt gezeichnet) Hebel 18 ebenfalls in die gestrichelt gezeichnete Lage verschwenkt wird. Blattfeder 16 ist bei 28 am Schenkel 20 befestigt, so dass aus Blattfeder 16 und den beiden Schenkeln 22, 20 des Hebels 18 ein stumpfwinkliges Dreieck gebildet ist. Schenkel 22 weist an seiner Unterseite eine Spannfläche 30 auf, die auf die Oberfläche eines Gerätekoffers 32 drückt. Sein vorderes Ende 34 ist umgebogen und greift über eine Kante des Gerätekoffers 32, so dass dieser sich nicht auf der Bodenplatte 2 verschieben kann.

Zu beiden Seiten jedes Gerätekoffers 32 wird jeweils eine Verriegelungseinrichtung 6 montiert. Befindet sich Betätigungshebel 12 in der gestrichelt gezeichneten Lage (Fig. 2), dann sind auch Nocken 14, Blattfeder 16 und Hebel 18 in der gestrichelt gezeichneten Lage, da die Feder 26 den Hebel in diese Stellung verschwenkt. Mühelos kann nun ein Gerätekoffer 32 in das Gestell eingeschoben werden. Nun wird Betätigungshebel 12 in die Lage "Spannen" verschwenkt, wobei Nocken 14 auf Blattfeder 16 entlanggleitet und über Schenkel 20 die Spannfläche 30 gegen den Gerätekoffer 32 drückt. Wenn der Nocken 14 senkrecht zur Blattfeder 16 ausgerichtet ist, ist seine Totpunktlage bezüglich Blattfeder 16 erreicht. Der Nocken 14 übt aber noch nicht seine maximale Kraftwirkung auf Hebel 18 aus, da zwischen Blattfeder 16 und den stumpfwinklig zueinander angeordneten Schenkeln 20, 22 des Hebels 18 ein freier Spalt 52 vorhanden ist. Beim Weiterverschwenken des Nockens 14 drückt dieser nun die Blattfeder 16 gegen den schräg verlaufenden Schenkel 20 und übt auf beide eine hohe Kraftwirkung aus, so dass Spannfläche 22 federnd gegen den Gerätekoffer 32 gedrückt wird. Dieses federnde Andrücken bleibt ständig erhalten, da zwischen dem Kraftangriffspunkt des Nockens auf dem schräg verlaufenden Schenkel 20 und der Oberfläche 31 des Gerätekoffers 32 ein freier Spalt 54 erhalten bleibt. Selbst bei hohen Stoss- und Schwingungsbelastungen kann Nocken 14 die in Vollstrichen gezeichnete Lage nicht verlassen, da er sich hinter seinem Totpunkt bezüglich der Blattfeder 16 befindet. Dies wird durch die Geometrie des aus den Schenkeln 20, 22 und der Blattfeder 16 gebildeten stumpfwinkligen Bereichs und der Lage des Dreiecks bezüglich des um Achse 10 drehbaren Nockens 14 erzielt.

Wird nun der Betätigungshebel in Richtung "Lösen" (Fig. 2) bewegt, wodurch gleichzeitig Hebel 18 mittels Wirkung der Feder 26 in die gestrichelte Lage gelangt, so kann der Gerätekoffer 32 entnommen werden.

Selbst bei grösseren Kabinen und Räumen ist auf einen Blick zu erkennen, ob sämtliche Gerätekoffer 32 ordnungsgemäss befestigt sind, da dann der Betätigungshebel 12 nicht oder nur wenig aus den Gestellen hervorragt. Befindet sich Betätigungshebel 12 dagegen in der in Fig. 2 gestrichelt gezeichneten Lage, dann sind die Gerätekoffer nicht befestigt. Es kann somit schnell und sicher festgestellt werden, ob eine mobile Einrichtung marschbereit ist. Dies ist ein erheblicher Vorteil gegenüber Schraubbefestigungen, da man Schrauben und Muttern nicht ansehen kann, ob sie bereits angezogen oder noch gelöst sind. Die Spannwirkung ist unabhängig vom Kraftaufwand des Bedieners.

Fig. 3 zeigt die Anordnung von Gerätekoffern in einem Gestell 1, wobei in der oberen Reihe vier kleinere Gerätekoffer 32, in der zweiten Reihe zwei grosse Gerätekoffer 32 und in der dritten und vierten Reihe jeweils ein grosser und zwei kleine Gerätekoffer angeordnet sind.

Würde jeder Gerätekoffer mit einem oder zwei Spannelementen gemäss der oben beschriebenen Art befestigt werden, so wäre eine Vielzahl von Betätigungshebeln 12 notwendig, die sich gegenseitig behindern würden.

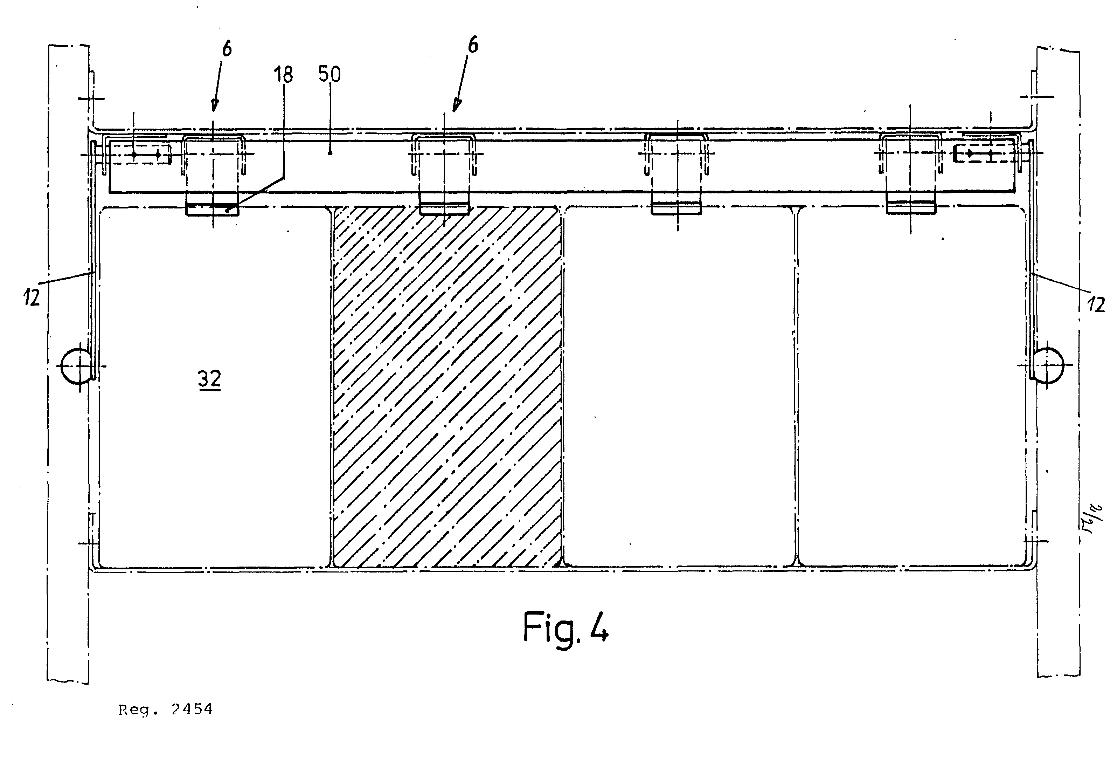

Erfindungsgemäss wird deshalb die Vorrichtung gemäss
Fig. 4 verwendet, wobei mehrere Hebel 18 von einer durchgehenden Nockenwelle 50 betätigt werden. Je nach vorhandenem Platz befinden sich ein oder zwei Betätigungshebel 12 an den Enden 52 der Nockenwelle 50. Ist nur ein
Betätigungshebel 12 vorgesehen, so wird das andere Ende
der Nockenwelle vorzugsweise in einer federnden Spannhülse (nicht gezeigt) gelagert, die am Gestell befestigt ist.

- 1 -

0015526

<u>P a t e n t a n s p r ü c h e</u>

1. Vorrichtung zum Befestigen von Gerätekoffern in Gestellen, wobei ein Spannelement auf eine ebene Oberfläche des Gerätekoffers einwirkt und ein stumpfwinklig abgebogener Hebel, dessen einer Schenkel eine Spannfläche bildet, am Gestell angelenkt ist, dass der Hebel auf der der Spannfläche abgewandten Seite eine an einem Schenkel befestigte Blattfeder aufweist, wobei die Schenkel des Hebels zusammen mit der Blattfeder ein stumpfwinkliges Dreieck bilden, und dass eine drehbar gelagerte Nocke, die mit einem Betätigungshebel starr verbunden ist, die Blattfeder berührt, eine Totpunktlage in bezug auf die Blattfeder durchläuft und auf den Schenkel drückt, so dass die Spannfläche den Gerätekoffer verspannt, dadurch gekennzeichnet, dass mehrere Spannelemente (6) am Gestell (1) angeordnet sind, die auf einen oder mehrere Gerätekoffer (32) einwirken und von Nocken (14) betätigt werden, die auf einer Nockenwelle (50) angeordnet sind, und dass die Nockenwelle (50) mit mindestens einem Betätigungshebel (12) verbunden ist.

2. Vorrichtung nach Anspruch 1, dadurch gekennzeichnet, dass die Nockenwelle (50) von Gestellseite zu Gestellseite verläuft und an ihren Enden jeweils ein Betätigungshebel (12) vorhanden ist.

3. Vorrichtung nach Anspruch 1 oder 2, dadurch gekennzeichnet, dass eine durchgehende Nockenprofilwelle vorhanden ist.

Fig.1

Fig.2

Fig.3

Fig. 4

0015526

Reg. 2454

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 845 173 (MATRA-WERKE) <br> * Seite 2, Zeilen 37-55 * | 1,3 |
| | US - A - 1 695 896 (GRAMARBEN) <br> * Seite 1, Zeilen 33-63 * | 1 |

**KLASSIFIKATION DER ANMELDUNG (Int.Cl. 3)**

H 02 B 1/08
E 05 B 65/46

**RECHERCHIERTE SACHGEBIETE (Int. Cl. 3)**

H 02 B 1/08
H 05 K 7/14
E 05 B 65/46

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-06-1980 | DAILLOUX |

EPA form 1503.1   06.78